# EUROPEAN PATENT APPLICATION

(11) **EP 2 696 417 A1**
(43) Date of publication of application: **12.02.2014**
(21) Application number: 12767696.3
(22) Date of filing: 06.04.2012
(51) Int. Cl.: H01M 8/06, H01M 8/04, H01M 8/24, H01M 8/12

(54) **FUEL CELL MODULE**

(30) Priority: 06.04.2011 JP 2011084580
(71) Applicant: JX Nippon Oil & Energy Corporation, Chiyoda-ku Tokyo 100-8162 (JP)
(72) Inventor: YOKOYAMA Shou, Tokyo 100-8162 (JP); MIZUNO Yasushi, Tokyo 100-8162 (JP); YAMAMOTO Satoru, Tokyo 100-8162 (JP)
(74) Representative: Grünecker, Kinkeldey, Stockmair & Schwanhäusser
(86) International application number: PCT/JP2012/059547
(87) International publication number: WO 2012/137931

(57) **Abstract**

A fuel cell module 1 comprises a vaporizer 5 for generating steam; a reformer 2 for generating reformed gas by using the steam and a hydrogen-containing fuel; a cell stack 3 for generating power by using the reformed gas; and a housing 7 which accommodates in inside thereof the vaporizer 5, the reformer 2, and the cell stack 3 and comprises in inside thereof a wall portion defining an exhaust gas flow channel 12 for discharging exhaust gas EG of the cell stack 3 to an outside, wherein the wall portion comprises an inner wall portion defining an accommodation chamber 11 which houses in inside thereof the reformer 2 and the cell stack 3; and an outer wall portion located on an outside of the inner wall portion and disposed opposite to and spaced from the inner wall portion, and defines the exhaust gas flow channel 12 communicating to the accommodation chamber 11 between the inner wall portion and the outer wall portion, and the vaporizer 5 is disposed in the exhaust gas flow channel 12 at a position below the reformer 2 and the cell stack 3 so that the vaporizer 5 is spaced from the reformer 2, and further, spaced from the outer wall portion.

## Description

### Technical Field

An aspect of the present invention relates to a fuel cell module.

### Background Art

As a fuel cell module, for example, a module disclosed in Patent Literature 1 has been conventionally known. The fuel cell module disclosed in Patent Literature 1 is configured by accommodating a reformer comprising a vaporization section and a reforming section for generating reformed gas by using a hydrogen-containing fuel; and a cell stack for generating power by using the reformed gas in a housing and then modularizing it. The vaporization section (reformer) is disposed above the cell stack, and supply pipes for supplying raw fuel gas and water are each connected from the outside of the housing. Within the housing, an exhaust gas flow channel for discharging exhaust gas of the cell stack to the outside of the housing is formed. In the exhaust gas flow channel, a heat exchange section for conducting heat exchange between the exhaust gas flowing in the exhaust gas flow channel; and the raw fuel gas or water flowing in the supply pipes is disposed.

Moreover, a fuel cell module disclosed in Patent Literature 2 comprises a reformer, a fuel cell for generating power by using oxidant gas containing oxygen and fuel gas generated in the reformer, and a combustion section for burning fuel off-gas which has not been used for power generation in a housing. The reformer is configured by being separated into a vaporization section and a reforming section. The reformer is provided along the fuel cell so that the vaporization section is disposed adjacent to the top end of the fuel cell and the reforming section is disposed adjacent to the bottom end of the fuel cell.

### Citation List

### Patent Literature

[Patent Literature 1] Japanese Patent Application Laid-Open No. 2010-80260
[Patent Literature 2] Japanese Patent Application Laid-Open No. 2011-014495

### Summary of Invention

### Technical Problem

However, in the fuel cell modules disclosed in Patent Literatures 1 and 2, the vaporizer and the reformer are close or configured integrally, and accommodated in the housing with the cell stack, and therefore, there is a possibility that the reforming section and/or the cell stack are cooled due to the effects of endotherm of the vaporizer. When a temperature of the cell stack is decreased due to the cooling, reduction in cell voltage occurs at the time of power generation. Moreover, when a temperature of the reformer is decreased due to the cooling, so-called slip, in which the fuel is supplied to the cell stack in a non-reformed state, occurs. Therefore, when the fuel cell module disclosed in Patent Literature 1 is employed, power generation performance of the fuel cell module may be decreased.

Thus, an aspect of the present invention is made aiming at solving such problems, and has an object to provide a fuel cell module which can achieve stable power generation performance.

### Solution to Problem

That is, a fuel cell module according to one aspect of the present invention comprises a vaporizer for generating steam; a reformer for generating reformed gas by using the steam and a hydrogen-containing fuel; a cell stack for generating power by using the reformed gas; and a housing which accommodates in inside thereof the vaporizer, the reformer, and the cell stack and comprises in inside thereof a wall portion defining exhaust gas flow channel for discharging exhaust gas of the cell stack to an outside, wherein the wall portion comprises an inner wall portion defining an accommodation chamber which accommodates in inside thereof the reformer and the cell stack; and an outer wall portion located on an outside of the inner wall portion and disposed opposite to and spaced from the inner wall portion, and defines the exhaust gas flow channel communicating to the accommodation chamber between the inner wall portion and the outer wall portion, and the vaporizer is disposed in the exhaust gas flow channel at a position below the reformer and the cell stack so that the vaporizer is spaced from the reformer.

In the fuel cell module according to one aspect of the present invention, the vaporizer, the reformer, and the cell stack are accommodated in the housing, the vaporizer is disposed in the exhaust gas flow channel at a position below the reformer and the cell stack so that the vaporizer is spaced from the reformer, and further, spaced from the outer wall portion. As mentioned above, the vaporizer is disposed spaced from the reformer, and therefore, it is possible to alleviate cooling of the reformer due to radiational cooling of the vaporizer. Hence, it is possible to achieve stable power generation performance. Furthermore, the vaporizer is disposed spaced from the outer wall portion, and therefore, it is possible to alleviate cooling of the vaporizer due to endotherm from the outside of the outer wall portion. Hence, generation of steam by the vaporizer is conducted efficiently and it is possible to achieve stable power generation performance.

### Advantageous Effects of Invention

According to one aspect of the present invention, it is possible to achieve stable power generation performance.

### Brief Description of Drawings

[Figure 1] Figure 1 is a schematic block diagram illustrating a fuel cell module according to a first embodiment.
[Figure 2] Figure 2 is a cross sectional view for explaining the inside of the fuel cell module according to the first embodiment.
[Figure 3] Figure 3(a) is a cross sectional view for explaining internal constitution of an exhaust box of the fuel cell module according to the first embodiment, Figure 3(b) is a cross sectional view taken along the line II-II of Figure 3(a), and Figure 3(c) is a cross sectional view taken along the line III-III of Figure 3(a).
[Figure 4] Figure 4 is a perspective view of an exhaust box 50.
[Figure 5] Figure 5 is a flow chart for explaining temperature control of a vaporizer by a control section 9 at the time of startup.
[Figure 6] Figure 6 is a flow chart for explaining temperature control of a vaporizer by a control section 9 at the time of operation.
[Figure 7] Figure 7(a) is a cross sectional view for explaining internal constitution of an exhaust box of the fuel cell module according to a second embodiment, Figure 7(b) is a cross sectional view taken along the line II-II of Figure 7(a), and Figure 7(c) is a cross sectional view taken along the line III-III of Figure 7(a).
[Figure 8] Figure 8(a) is a cross sectional view for explaining internal constitution of an exhaust box of the fuel cell module according to a third embodiment, Figure 8(b) is a cross sectional view taken along the line II-II of Figure 8(a), and Figure 8(c) is a cross sectional view taken along the line III-III of Figure 8(a).

### Description of Embodiments

Hereinafter, embodiments of the present invention will be described in detail with reference to the drawings. It is noted that the same or corresponding parts are denoted by the same reference numerals and the overlapping description will be omitted in the following description.

### (First embodiment)

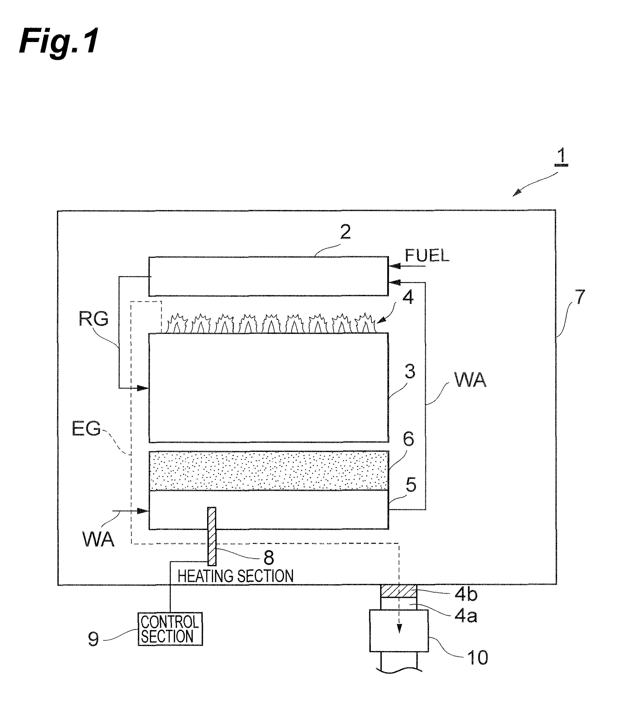

Figure 1 is a schematic block diagram illustrating a fuel cell module according to one embodiment of the present invention. As shown in Figure 1, a fuel cell module 1 of the present embodiment comprises a reformer 2, a cell stack 3, a combustion section 4, a vaporizer 5, a heat insulating member 6, and a housing 7. As the housing 7, for example, a metal box having a rectangular shape is employed, and the housing 7 accommodates the reformer 2, the cell stack 3, the combustion section 4, the vaporizer 5, and the heat insulating member 6 in the inside thereof.

The fuel cell module 1 generates power by using a hydrogen-containing fuel and an oxidant in the cell stack 3. The cell stack 3 comprises a stack of a plurality of cells, which is so-called SOFC (Solid Oxide Fuel Cells). Each cell is configured by disposing an electrolyte, which is a solid oxide, between a fuel electrode and an oxidant electrode. The electrolyte is composed of, for example, yttria-stabilized zirconia (YSZ) or the like, and conducts an oxide ion at high temperatures. The fuel electrode is composed of, for example, a mixture of nickel and YSZ, and generates an electron and water by means of a reaction between an oxide ion and hydrogen contained in the reformed gas. The oxidant electrode is composed of, for example, lanthanum strontium manganite, and generates an oxide ion by means of a reaction between oxygen contained in the oxidant and an electron.

As the hydrogen-containing fuel, for example, a hydrocarbon fuel is used. As the hydrocarbon fuel, a compound containing carbon and hydrogen in a molecule (the compound may contain other elements such as oxygen) or a mixture thereof is used. Examples of the hydrocarbon fuel include hydrocarbons, alcohols, ethers, and biofuels, and it is possible to arbitrarily use conventionally used one derived from a fossil fuel such as petroleum and coal, one derived from a synthetic fuel such as synthetic gas, or one derived from biomass as the hydrocarbon fuel. Specifically, examples of the hydrocarbons include methane, ethane, propane, butane, natural gas, LPG (liquefied petroleum gas), city gas, town gas, gasoline, naphtha, kerosene, and light oil.

Examples of the alcohols include methanol and ethanol. Examples of the ethers include dimethyl ether. Examples of the biofuels include biogas, bioethanol, biodiesel, and biojet. As the oxidant, for example, air, pure oxygen gas (the gas may contain impurities which are hard to be removed by ordinary removal means), or oxygen-enriched air is used.

The reformer 2 is connected to a fuel blower not shown in the Figures and supplied with the hydrogen-containing fuel by the fuel blower, and at the same time, the reformer 2 is connected to the vaporizer 5 and is supplied with vaporized water. The reformer 2 generates reformed gas by using the hydrogen-containing fuel and water which are to be supplied. The reformer 2 generates the reformed gas by reforming the hydrogen-containing fuel by means of a reforming reaction using a reforming catalyst. The reforming method employed by the reformer 2 is not particularly limited, and for example, steam reforming, partial oxidation reforming, autothermal reforming, or other reforming methods can be employed. The reformer 2 is disposed above the cell stack 3 so that the reformer 2 can be heated by combustion heat described below. The reformer 2 supplies the reformed gas to the fuel electrode of the cell stack 3.

The cell stack 3 generates power by using the reformed gas from the reformer 2 and the oxidant supplied from an air blower not shown in the Figures or the like. The cell stack 3 supplies the reformed gas and the oxidant which have not been used for power generation to the combustion section 4 as off-gas.

The combustion section 4 bums the off-gas supplied from the cell stack 3 and heats the reformer 2. The combustion section 4 is located over the cell stack 3. Exhaust gas generated by combustion in the combustion section 4 is discharged to the outside of the housing 7 through an exhaust gas pipe 4a. The exhaust gas pipe 4a is provided with a combustion catalyst 4b, and the exhaust gas to be discharged is subjected to combustion treatment by the combustion catalyst 4b. Moreover, a heat exchange section 10 is connected to the exhaust gas pipe 4a and heat of the exhaust gas is recovered by heat exchange with stored water or the like not shown in the Figures.

The vaporizer 5 heats and vaporizes supplied water and generates steam to be supplied to the reformer 2. The vaporizer 5 is connected to a water pump not shown in the Figures and supplied with water by the water pump. The vaporizer 5 supplies generated steam to the reformer 2. The vaporizer 5 is provided with a heater (heating section) 8 for heating the vaporizer 5. The heating section 8 is connected to a control section 9 and operates based on signals from the control section 9. The control section 9 is an ordinary computer device comprising CPU, ROM, RAM, or the like. Heating of water in the vaporizer 5 is conducted by means of heat of the heating section 8 or heat of the exhaust gas.

The heat insulating member 6 is disposed between the cell stack 3 and the vaporizer 5, and prevents heat exchange between the cell stack 3 and the vaporizer 5.

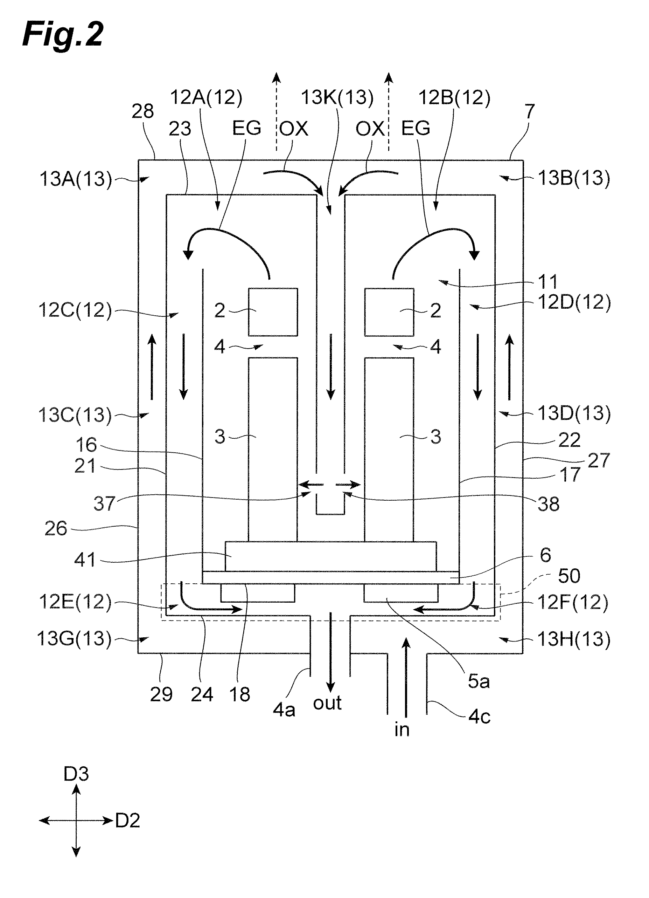

Here, location of the vaporizer 5 will be described in detail. Figure 2 is a cross sectional view for explaining location of inner flow channels and constituents of the fuel cell module 1 shown in Figure 1. As shown in Figure 2, the housing 7 comprises inner space for accommodating the reformer 2 and the cell stack 3. The housing 7 comprises an accommodation chamber 11 accommodating the cell stack 3 and the reformer 2; an exhaust gas flow channel 12 which is formed on the outside of the accommodation chamber 11 and allows an exhaust gas EG resulting from combustion of the off-gas from the cell stack 3 to pass; an oxidant flow channel 13 which allows the oxidant OX to pass; and wall portions defining the accommodation chamber 11, the exhaust gas flow channel 12, and the oxidant flow channel 13. It is noted that following description will be given with taking a direction along a stack direction of the cells of the cell stack 3 (a direction perpendicular to the Figure) as "length direction D1" of the housing 7, taking a direction perpendicular to the stack direction of the cells in the horizontal direction as "width direction D2" of the housing 7, and taking the vertical direction as "top and bottom direction D3" of the housing 7. In the present embodiment, the accommodation chamber 11, the exhaust gas flow channel 12, the oxidant flow channel 13, and the wall portions defining these constituents have left-right symmetric configurations as seen from the length direction D 1.

The accommodation chamber 11 is defined by first side wall portions 16, 17 facing each other in the width direction D2; and a first bottom wall portion 18 connected to bottom ends of the first side wall portions 16, 17. Hereinafter, the first side wall portions 16, 17 and the first bottom wall portion 18 which define the accommodation chamber 11 are termed an inner wall portion. The heat insulating member 6 is disposed on the first bottom wall portion 18 and a base 41 for supporting the cell stack 3 is disposed on the heat insulating member 6. A top end of the accommodation chamber 11 is open for allowing the exhaust gas EG generated in the combustion section 4 to pass. That is, at least space above the combustion section 4 in the accommodation chamber 11 is substantially "exhaust gas flow channel" because the exhaust gas EG flows.

The reformer 2 is disposed downstream of the cell stack 3 in the "exhaust gas flow channel" which is a part of the accommodation chamber 11 and disposed above the cell stack.

The exhaust gas flow channel 12 is defined by the inner wall portion defining the accommodation chamber 11; second side wall portions 21, 22 which are disposed on the outside of the first side wall portions 16, 17 in the width direction D2, respectively; a first top wall portion 23 disposed above top ends of the first side wall portions 16, 17; and a second bottom wall portion 24 disposed below the first bottom wall portion 18. Hereinafter, the second side wall portions 21, 22, the first top wall portion 23, and the second bottom wall portion 24 are termed an outer wall portion.

The first top wall portion 23 is connected to top ends of the second side wall portions 21, 22, and the second bottom wall portion 24 is connected to bottom ends of the second side wall portions 21, 22. The second side wall portions 21, 22 are disposed facing and spaced from the first side wall portions 16, 17.

The exhaust gas flow channel 12 comprises exhaust gas flow channels 12A, 12B formed between the opening above the accommodation chamber 11 and the first top wall portion 23; exhaust gas flow channels 12C, 12D formed between the second side wall portions 21, 22 and the first side wall portions 16, 17; and exhaust gas flow channels 12E, 12F formed between the second bottom wall portion 24 and the first bottom wall portion 18. The exhaust gas flow channels 12A, 12B lead the exhaust gas EG from the combustion section 4 to the exhaust gas flow channels 12C, 12D. The exhaust gas flow channels 12C, 12D allow the exhaust gas EG to pass downward and supply heat of the exhaust gas EG to the oxidant OX flowing in oxidant flow channels 13C, 13D located outside. The exhaust gas flow channels 12E, 12F allow the exhaust gas EG to pass in the horizontal direction toward the exhaust gas pipe 4a. As just described, the exhaust gas flow channel 12 comprises the inner wall portion and the outer wall portion which is disposed on the outside of the inner wall portion so that the outer wall portion faces and is spaced from the inner wall portion, and is formed between the inner wall portion and the outer wall portion so that the exhaust gas flow channel 12 connects with the accommodation chamber 11.

The oxidant flow channel 13 is defined by the wall portion defining the exhaust gas flow channel 12; third side wall portions 26, 27 which are disposed on the outside of the second side wall portions 21, 22 in the width direction D2, respectively; a second top wall portion 28 disposed above the first top wall portion 23; and a third bottom wall portion 29 disposed below the second bottom wall portion 24.

The second top wall portion 28 is connected to top ends of the third side wall portions 26, 27, and the third bottom wall portion 29 is connected to bottom ends of the third side wall portions 26, 27. The third side wall portions 26, 27 are disposed facing and spaced from the second side wall portions 21, 22. The second top wall portion 28 is disposed facing and spaced from the first top wall portion 23. The third bottom wall portion 29 is disposed facing and spaced from the second bottom wall portion 24.

The first top wall portion 23 is provided with an oxidant supply member 36 at a center thereof. The oxidant supply member 36 extends downward from the first top wall portion 23 and supplies the oxidant OX to the cell stack 3. The oxidant supply member 36 extends interposing a space between a pair of the cell stacks 3 and defines an oxidant flow channel 13K at the inside thereof, and further, comprises through holes 37, 38 at a tip end.

The oxidant flow channel 13 comprises oxidant flow channels 13A, 13B formed between the second top wall portion 28 and the first top wall portion 23; oxidant flow channels 13C, 13D formed between the third side wall portions 26, 27 and the second side wall portions 21, 22; and oxidant flow channels 13G, 13H formed between the third bottom wall portion 29 and the second bottom wall portion 24. The oxidant flow channels 13G, 13H allow the oxidant OX supplied from an aeration pipe 4c to pass to spread in the horizontal direction, and lead the oxidant OX to the oxidant flow channels 13C, 13D. The oxidant flow channels 13C, 13D allow the oxidant OX to pass upward and heat the oxidant OX by heat of the exhaust gas EG flowing in the exhaust gas flow channels 12C, 12D located inside. The oxidant flow channels 13A, 13B allow the oxidant OX to pass from the outside to the inside in the width direction D2, and then, to flow into the oxidant flow channel 13K in the oxidant supply member 36 and reach the through holes 37, 38.

The third bottom wall portion 29 is provided with the aeration pipe 4c for pouring the oxidant from an oxidant supply section not shown in the Figures into the oxidant flow channel 13. Moreover, the second bottom wall portion 24 is provided with the exhaust gas pipe 4a for discharging the exhaust gas from the exhaust gas flow channel 12.

Next, flow of the reformed gas, the oxidant OX, and the exhaust gas EG will be described.

The reformed gas generated in the reformer 2 by using the hydrogen-containing fuel supplied from the outside and the steam supplied from the vaporizer 5 passes a pipe connecting the reformer 2 and the base 41 not shown in the Figures and flows into the base 41, and then, is supplied from the base 41 to the cells of the cell stack 3. The reformed gas flows from the bottom to the top in the cell stack 3, and a part thereof is used for combustion in the combustion section 4 as the off-gas. The oxidant OX is supplied from the outside through the aeration pipe 4c, spreads in the horizontal direction in the oxidant flow channels 13G, 13H, and passes the oxidant flow channels 13C, 13D upward with being heated by the exhaust gas EG flowing inside. The oxidant OX passes the oxidant flow channels 13A, 13B to flow into the oxidant flow channel 13K of the oxidant supply member 36, and then, is supplied to the cell stack 3 after passing the through holes 37, 38, and a part thereof is used for combustion in the combustion section 4. The exhaust gas EG generated in the combustion section 4 flows upward in the accommodation chamber 11 and heats the reformer 2. After that, the exhaust gas EG is led to the exhaust gas flow channels 12C, 12D by the exhaust gas flow channels 12A, 12B, and passes downward the exhaust gas flow channels 12C, 12D with supplying heat to the oxidant OX flowing outside. The exhaust gas EG flows into the exhaust gas flow channels 12E, 12F when the exhaust gas EG reaches the bottom part, and passes the exhaust gas flow channels 12E, 12F with supplying heat to the vaporizer 5. The exhaust gas EG passed the exhaust gas flow channels 12E, 12F is discharged from the exhaust gas pipe 4a.

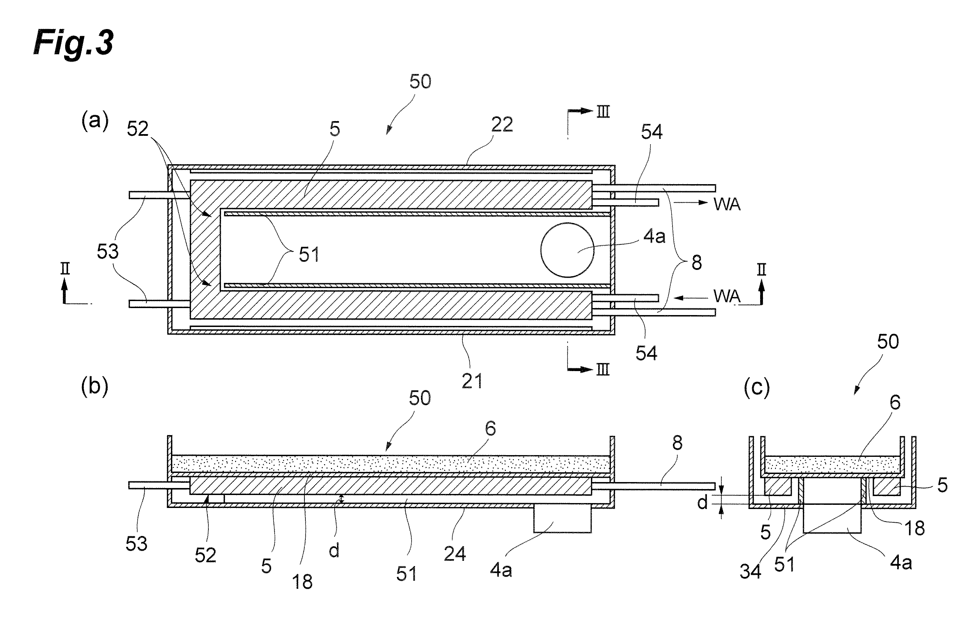

The exhaust gas flow channels 12E, 12F located at a lower portion of the housing 7 and under the accommodation chamber 11 is provided with the vaporizer 5. Hereinafter, the vaporization section 5 will be described in detail with terming a box an exhaust box 50, the box taking the second bottom wall portion 24 and the first bottom wall portion 18 defining the exhaust gas flow channels 12E, 12F as a bottom part and a lid part, respectively; and taking bottom ends of the second side wall portions 21, 22 as side parts. Space is provided between the lid part and the side parts of the exhaust box 50, which forms inlet parts for the exhaust gas passed the exhaust gas flow channels 12C, 12D to flow into the exhaust box 50. Figure 3(a) is a cross sectional view for explaining internal constitution of the exhaust box 50 shown in Figure 2, Figure 3(b) is a cross sectional view taken along the line II-II of Figure 3(a), and Figure 3(c) is a cross sectional view taken along the line III-III of Figure 3(a). As shown in Figures 3(a) to (C), the exhaust box 50 comprises the exhaust gas pipe (discharge part) 4a, the vaporizer 5, and a partition plate (plate portion) 51.

The vaporizer 5 is a tubular body having an inner space for vaporizing water. The vaporizer 5 has two bend sections and then has a bend shape of about U-shape as seen from the top and bottom direction (D3 direction). That is, the vaporizer 5 comprises a first vaporizer extending from one end to the bend section in the length direction D1, a second vaporizer extending between the bend sections in the width direction D2, and a third vaporizer disposed facing the first vaporizer and extending from the bend section to another end in the length direction D1. The vaporizer 5 is disposed overlapping with the cell stack 3 as seen from the top and bottom direction (D3 direction). Moreover, the vaporizer 5 is disposed so that the exhaust gas pipe 4a is present between the first vaporizer and the third vaporizer. The vaporizer 5 is disposed at a predetermined distance d from the second bottom wall portion 24. That is, the vaporizer 5 is disposed spaced from the second bottom wall portion 24. The predetermined distance d is not particularly limited as long as the exhaust gas EG can flow, and it is possible to set the predetermined distance d to, for example, about 5 mm.

Both ends of the partition plate 51 are connected to the lid part and the bottom part of the exhaust box 50, respectively, and thus, the partition plate 51 is erected in the exhaust box 50. There are provided two partition plates 51 so that the partition plates 51 face each other across the exhaust gas pipe 4a and extend along the inner side of the first vaporizer and the inner side of the second vaporizer. The two partition plates 51 face each other in the horizontal direction. The partition plates 51 are erected on the second bottom wall portion 24 and top ends thereof are connected to the first bottom wall portion 18, and thus, the partition plates 51 extend in the length direction D1 along the inner side of the vaporizer 5. Furthermore, each of the partition plates 51 is connected to a second side wall portion 25 connected to the second side wall portions 21, 22, and comprises an unconnected portion 52 not connected to a second side wall portion 26 facing the second side wall portion 25. As just described, the partition plate 51 is disposed partitioning the inner space of the exhaust box 50, and forms the exhaust gas flow channel between the inlet parts and the discharge part. The exhaust gas pipe 4a is provided between the two partition plates 51 as seen from the vertical direction.

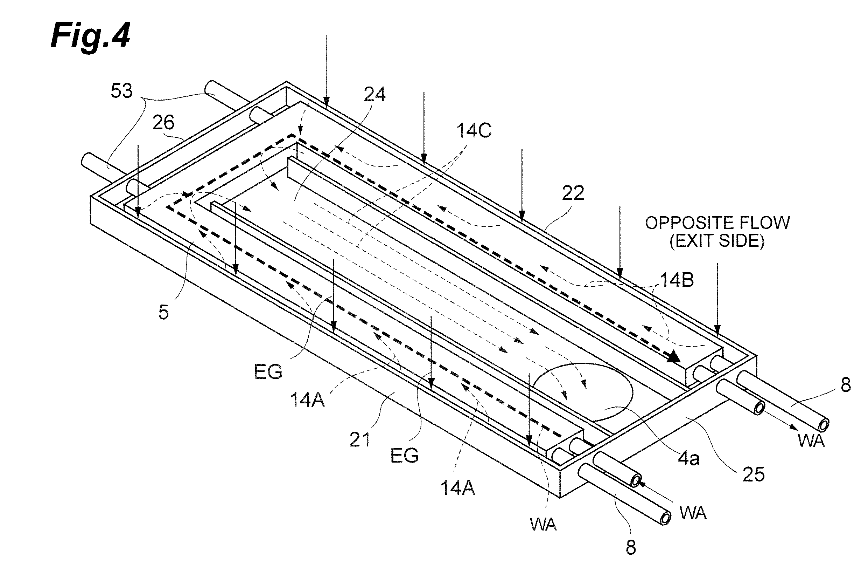

Next, flow of the exhaust gas EG in the exhaust box 50 will be described. Figure 4 illustrates flow of the exhaust gas EG in the exhaust box. The exhaust box 50 comprises an exhaust gas flow channel 14 for allowing the exhaust gas EG which has passed the exhaust gas flow channels 12C, 12D and then flowed into the exhaust box 50 to pass.

The exhaust gas flow channel 14 comprises exhaust gas flow channels 14A, 14B formed by the first bottom wall portion 18, the second side wall portions 21, 22, the second bottom wall portion 24, and the partition plates 51; and an exhaust gas flow channel 14C formed by the first bottom wall portion 18, the partition plates 51 facing each other, and the second bottom wall portion 24. The exhaust gas EG which has flowed downward in the exhaust gas flow channels 12C, 12D flows into the exhaust box 50 downward in the vertical direction and passes the exhaust gas flow channels 14A, 14B. At this time, the exhaust gas EG passes the space between the vaporizer 5 and the second bottom wall portion 24 with heating the vaporizer 5. When the exhaust gas EG reaches the unconnected portions 52 where the partition plates 51 are not provided, the exhaust gas EG which has passed the exhaust gas flow channels 14A, 14B joins together and passes the exhaust gas flow channel 14C. The exhaust gas EG which has passed the exhaust gas flow channel 14C is discharged from the exhaust gas pipe 4a.

Next, constitution of the vaporizer 5 will be described. A heating section 8, a water pipe 54, and a thermometer 53 are inserted into the vaporizer 5. The water pipe 54 supplies water WA into the vaporizer 5. Water WA is poured from the water pipe 54 by means of a water pump. The water WA poured is heated by heat of the vaporizer 5 when it passes the vaporizer 5, and then, discharged from the water pipe 54 which is disposed at an exit side of the vaporizer 5 as steam. Thus, the flow direction of the water WA is opposite to that of the exhaust gas EG passing the exhaust gas flow channel 14B at the exit side of the vaporizer 5.

The heating section 8 is a device for heating the vaporizer 5, and operates by, for example, applying a voltage. The thermometer 53 measures the temperature of the vaporizer 5, and outputs temperature information to the control section 9 by electric wiring not shown in the Figures.

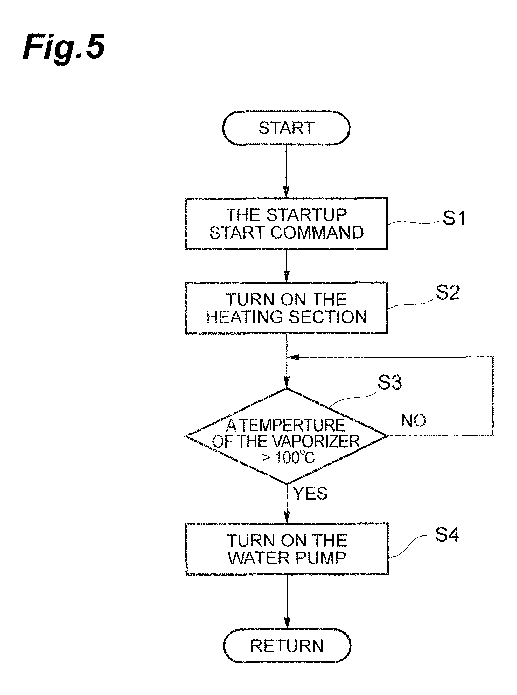

The control section 9 controls actuation of the heating section 8 based on the temperature of the vaporizer 5 obtained from the thermometer 53. The control process of the heating section 8 by the control section 9 at the time of startup of the fuel cell module 1 will be described with reference to the flow chart shown in Figure 5. First, when the control section 9 obtains a startup start command of the fuel cell module 1 (S1), the control section 9 transmits an actuating signal to the heating section 8 to actuate the heating section 8 (S2). Next, the control section 9 obtains the temperature information from the thermometer 53, and judges whether the temperature of the vaporizer 5 is higher than the predetermined temperature (for example, 100°C) or not (S3). When the control section 9 judges that the temperature of the vaporizer is higher than the predetermined temperature, the control section 9 actuates the water pump to pour water WA into the vaporizer 5 (S4). On the other hand, when the control section 9 judges that the temperature of the vaporizer is equal to or lower than the predetermined temperature at S3, the control section 9 moves into the S3 process and repeats the judgment at predetermined time intervals until the temperature of the vaporizer 5 becomes higher than the predetermined temperature.

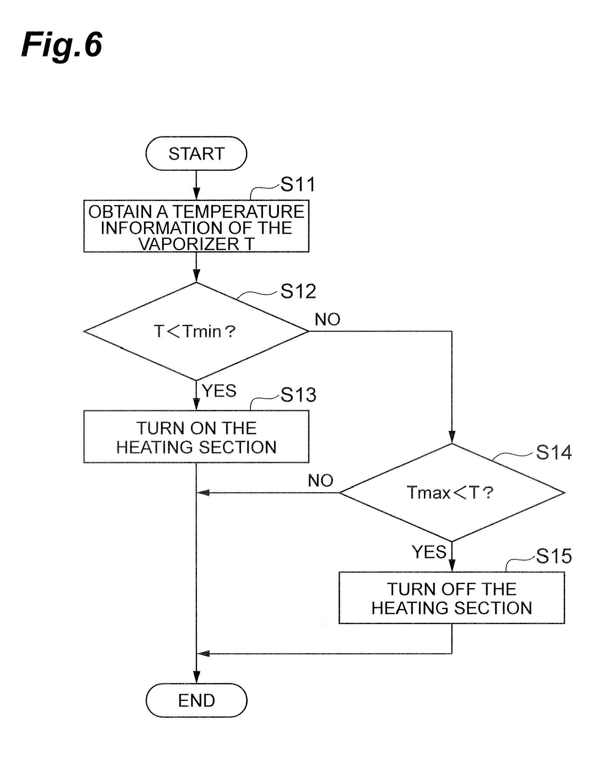

Next, the control process of the heating section 8 by the control section 9 at the time of operation of the fuel cell module 1 will be described with reference to the flow chart shown in Figure 6. The control section 9 performs the following process shown in Figure 6 at predetermined time intervals. First, the control section 9 obtains the temperature information of the vaporizer 5 from the thermometer 53 (S11), and judges whether the temperature of the vaporizer 5 is higher than a first threshold value Tmin or not (S12). When the temperature of the vaporizer 5 is lower than the first threshold value Tmin, the control section 9 transmits an actuating signal to the heating section 8 to actuate the heating section 8 (S13), and then, terminates the process. On the other hand, when the temperature of the vaporizer 5 is equal to or higher than the first threshold value Tmin, the control section 9 judges whether the temperature of the vaporizer 5 is higher than a second threshold value Tmax or not (S 14). The second threshold value Tmax is a threshold value higher than the first threshold value Tmin. When the temperature of the vaporizer 5 is higher than the second threshold value Tmax, the control section 9 transmits a stop signal to the heating section 8 to stop the heating section 8 (S 15), and then, terminates the process. On the other hand, when the temperature of the vaporizer 5 is equal to or lower than the second threshold value Tmax, the control section 9 terminates the process directly.

As mentioned above, in the fuel cell module 1 according to the first embodiment, the vaporizer 5, the reformer 2, and the cell stack 3 are accommodated in the housing 7, and the vaporizer 5 is disposed in the exhaust gas flow channel at a position below the reformer 2 and the cell stack 3 so that the vaporizer 5 is spaced from the reformer 2, and further, spaced from the second bottom wall portion 24. Because the vaporizer 5 is disposed spaced from the reformer 2 in this way, it is possible to alleviate cooling of the reformer 2 due to radiational cooling of the vaporizer 5. Hence, it is possible to achieve stable power generation performance. Furthermore, because the vaporizer 5 is disposed spaced from the second bottom wall portion 24 defining the exhaust gas flow channel, it is possible to alleviate cooling of the vaporizer 5 due to endotherm from the outside of the exhaust gas flow channel. Hence, it is possible to generate steam efficiently in the vaporizer 5 and achieve stable power generation performance.

Now, reduction in the temperature of the cell stack 3 decreases cell voltage at the time of power generation and then decreases power generation efficiency, and at the same time, results in earlier deterioration of the cell stack 3 because a sweep current becomes high (high current density) when power is generated at the same power output. Moreover, reduction in the temperature of the reformer 2 results in so-called slip, in which the fuel flows into the cell stack 3 in an unreformed state. In the fuel cell module 1 according to the first embodiment, it is possible to improve the power generation efficiency by disposing the vaporizer 5 so that the vaporizer 5 is spaced from the cell stack 5 with the second bottom wall portion 24 intervening therebetween and suppressing reduction in the temperature of the cell stack 3. Furthermore, it is possible to prevent damage of the cell stack 3 due to slip of the fuel by disposing the vaporizer 5 so that the vaporizer 5 is spaced from the reformer 2 and suppressing reduction in the temperature of the reformer 2.

Moreover, according to the fuel cell module 1 according to the first embodiment, it is possible to further alleviate cooling of the cell stack 3 due to radiational cooling of the vaporizer 5 because the heat insulating member 6 is disposed between the vaporizer 5 and the cell stack 3 and the heat insulating member 6 suppresses heat exchange between the cell stack 3 and the vaporizer 5.

Furthermore, according to the fuel cell module 1 according to the first embodiment, by further installing the heating section 8 for heating the vaporizer 5, it is possible to appropriately control the temperature of the heating section 8 even if heat quantity of the exhaust gas from the cell stack 3 varies. The actuation of the heating section 8 may be controlled based on the temperature of the vaporizer 5 and the predetermined threshold value upon measurement of the temperature of the vaporizer 5. According to the present embodiment, it is possible to improve usage efficiency of heat of the exhaust gas by ensuring long contact distance between the exhaust gas and the vaporizer 5. Therefore, it is possible to reduce actuation frequency of the heating section 8 at the time of startup and/or ordinary operation. Thus, it is possible to reduce power consumption of the heating section 8 required for power generation, and then, to improve the power generation efficiency of a fuel cell system.

### (Second embodiment)

A fuel cell module according to a second embodiment is almost similar in constitution to the fuel cell module 1 according to the first embodiment, and only the constitution of the exhaust box 50 differs. In the present embodiment, an exhaust box 50A is provided instead of the exhaust box 50. Hereinafter, description will be given with a focus on the difference with the fuel cell module 1 according to the first embodiment for ease of understanding of the description, and the overlapping description will be omitted.

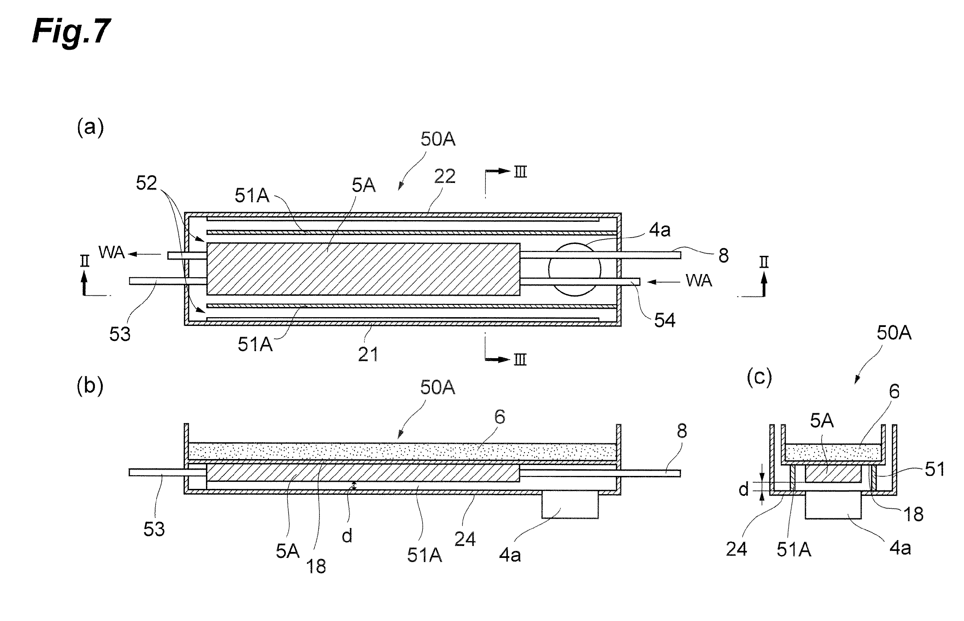

Figure 7 illustrates the constitution of the exhaust box 50A of the fuel cell module according to the present embodiment. Figure 7(a) is a cross sectional view for explaining internal constitution of the exhaust box 50A, Figure 7(b) is a cross sectional view taken along the line II-II of Figure 7(a), and Figure 7(c) is a cross sectional view taken along the line III-III of Figure 7(a). As shown in Figures 7(a) to (C), the exhaust box 50A comprises the exhaust gas pipe 4a, a vaporizer 5A, and a partition plate 51A.

As shown in Figures 7(b) and (c), the exhaust box 50 is provided with the vaporizer 5 having a rectangular shape. The vaporizer 5 is disposed at a predetermined distance d from the second bottom wall portion 24. That is, the vaporizer 5 is disposed spaced from the second bottom wall portion 24. The predetermined distance d is not particularly limited as long as the exhaust gas EG can flow, and it is possible to set the predetermined distance d to, for example, about 5 mm.

There are provided two partition plates 51A so that the partition plates 51A face each other across the vaporizer 5 and the exhaust gas pipe 4a and extend along the outer sides of the vaporizer 5. The partition plates 51A are erected on the second bottom wall portion 24 and top ends thereof are connected to the first bottom wall portion 18, and thus, the partition plates 51A extend in the length direction D1 along the inner sides of the vaporizer 5. Furthermore, each of the partition plates 51A is connected to the second side wall portion 25 connected to the second side wall portions 21, 22, and comprises an unconnected portion 52 not connected to the second side wall portion 26 facing the second side wall portion 25.

Next, since flow of the exhaust gas EG in the exhaust box 50A is the same as that in the first embodiment, detailed description will be omitted. Also in the exhaust box 50A in the present embodiment, the exhaust gas EG which has flowed downward in the exhaust gas flow channels 12C, 12D flows into the exhaust box 50A downward in the vertical direction. Then, the exhaust gas EG passes the exhaust gas flow channel formed by the partition plates 51 and the second side wall portions 21, 22. After that, the exhaust gas EG which has reached the unconnected portions 52 where the partition plates 51 are not provided passes the space between the vaporizer 5 and the second bottom wall portion 24 with heating the vaporizer 5, and then, discharged from the exhaust gas pipe 4a. Thus, water WA is countercurrent to the exhaust gas EG.

The fuel cell module 1 according to the second embodiment has similar effect to that of the fuel cell module 1 according to the first embodiment. Furthermore, since the flow direction of water WA is opposite to the flow direction of the exhaust gas EG in the present embodiment, it is possible to improve heat efficiency and heat the vaporizer at high energy efficiency.

### (Third embodiment)

A fuel cell module according to a third embodiment is almost similar in constitution to the fuel cell module 1 according to the second embodiment, and only the constitution of the exhaust box 50A differs. In the present embodiment, an exhaust box 50B is provided instead of the exhaust box 50A. Hereinafter, description will be given with a focus on the difference with the fuel cell module according to the second embodiment for ease of understanding of the description, and the overlapping description will be omitted.

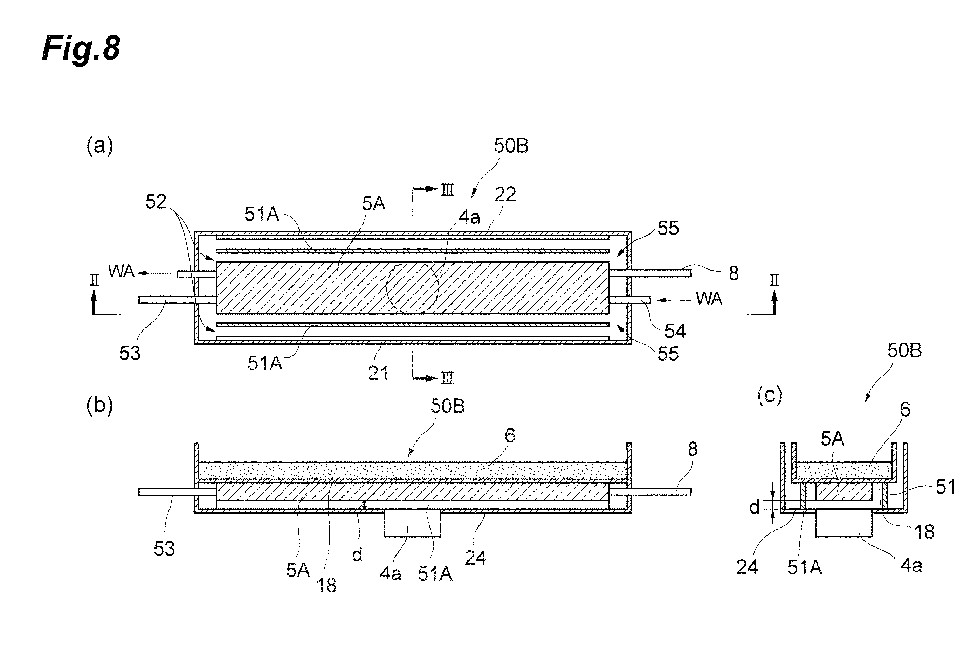

Figure 8 illustrates the constitution of the exhaust box 50B of the fuel cell module according to the present embodiment. Figure 8(a) is a cross sectional view for explaining internal constitution of the exhaust box 50B, Figure 8(b) is a cross sectional view taken along the line II-II of Figure 8(a), and Figure 8(c) is a cross sectional view taken along the line III-III of Figure 6(a). As shown in Figures 8(a) to (C), the exhaust box 50B comprises the exhaust gas pipe 4a, the vaporizer 5A, and the partition plate 51A.

There are provided two partition plates 51A so that partition plates 51A face each other across the vaporizer 5 and the exhaust gas pipe 4a and extend along the outer sides of the vaporizer 5. The exhaust gas pipe 4a is provided roughly in the center of the exhaust box 50B. The partition plates 51A are erected on the second bottom wall portion 24 and top ends thereof are connected to the first bottom wall portion 18, and thus, the partition plates 51A extend in the length direction D1 along the inner sides of the vaporizer 5. Furthermore, each of the partition plates 51A comprises an unconnected portion 55 not connected to the second side wall portion 25 connected to the second side wall portions 21, 22, and an unconnected portion 52 not connected to the second side wall portion 26 facing the second side wall portion 25.

Next, since flow of the exhaust gas EG in the exhaust box 50B is the same as those in the first and second embodiments, detailed description will be omitted. Also in the exhaust box 50B in the present embodiment, the exhaust gas EG which has flowed downward in the exhaust gas flow channels 12C, 12D flows into the exhaust box 50B downward in the vertical direction. Then, the exhaust gas EG passes the exhaust gas flow channel formed by the partition plates 51 and the second side wall portions 21, 22. After that, the exhaust gas EG which has reached the unconnected portions 52, 55 where the partition plates 51 are not provided passes the space between the vaporizer 5 and the second bottom wall portion 24 with heating the vaporizer 5, and then, discharged from the exhaust gas pipe 4a.

The fuel cell module according to the third embodiment has similar effect to that of the fuel cell module according to the first embodiment. It is possible to form a flow channel ensuring long contact distance between the exhaust gas and the vaporizer 5 by disposing the exhaust gas pipe 4a roughly in the center of the exhaust box 50B and placing two partition plates 51A facing each other across the vaporizer 5 and the exhaust gas pipe 4a as in the present embodiment.

The embodiments of the present invention were described above, but the present invention is not limited to the embodiments and may be changed without departing from the scope of each claim or applied to others.

For example, while the description was given of a case in which the heat insulating member 6 is provided in the above embodiments, the fuel cell module may be constituted without being provided with the heat insulating member 6 as required. The flow charts shown in Figures 5 and 6 are explained as to the first embodiment, but the control flows may be applied to the second embodiment and the third embodiment.

Moreover, while the description was given of a case in which the vaporizer 5 is provided with the heating section 8, the control section 9, and the thermometer 53 in the above embodiments, the fuel cell module may be constituted without being provided with the heating section 8, the control section 9, and the thermometer 53 as required. Furthermore, the vaporizer 5 may be disposed so that the whole or a part of the vaporizer 5 does not overlap with the cell stack 3 as seen from the top and bottom direction (D3 direction).

Moreover, it is possible to change the shape of the housing 7 without departing from the scope of each claim. For example, a top end of the accommodation chamber 11 may be interfolded by forming folded portions extending in the horizontal direction toward the inner side at top ends of the first side wall portions 16, 17. Furthermore, in the above embodiments, the oxidant was introduced from above. However, the oxidant may be introduced from below by covering the housing 7 by another case and providing an aeration pipe under the case.

### Reference Signs List

1 ... fuel cell module, 2 ... reformer, 3 ... cell stack, 5, 5A ... vaporizer, 6 ... heat insulating member, 7 ... housing, 8 ... heating section, 9 ... control section, 11 ... accommodation chamber (a part thereof is exhaust gas flow channel), 12, 14 ... exhaust gas flow channel, 53 ... thermometer

## Claims

1. A fuel cell module comprising:
a vaporizer for generating steam;
a reformer for generating reformed gas by using the steam and a hydrogen-containing fuel;
a cell stack for generating power by using the reformed gas; and
a housing which accommodates in inside thereof the vaporizer, the reformer, and the cell stack and comprises in inside thereof a wall portion defining an exhaust gas flow channel for discharging exhaust gas of the cell stack to an outside, wherein
the wall portion comprises an inner wall portion defining an accommodation chamber which accommodates in inside thereof the reformer and the cell stack; and an outer wall portion located on an outside of the inner wall portion and disposed opposite to and spaced from the inner wall portion, and defines the exhaust gas flow channel communicating to the accommodation chamber between the inner wall portion and the outer wall portion, and
the vaporizer is disposed in the exhaust gas flow channel at a position below the reformer and the cell stack so that the vaporizer is spaced from the reformer, and further, spaced from the outer wall portion.

2. The fuel cell module according to claim 1, wherein the vaporizer is disposed at a lower portion of the housing.

3. The fuel cell module according to claim 2, wherein
the lower portion of the housing makes up an exhaust box accommodating the vaporizer, and
the exhaust box comprises an inlet part into which the exhaust gas flows from the exhaust gas flow channel; a discharge part for discharging the exhaust gas which has flowed into from the inlet part to an outside of the exhaust box; and a plate portion forming a flow channel of the exhaust gas between the inlet part and the discharge part in the exhaust box.

4. The fuel cell module according to claim 3, wherein
the exhaust box comprises a lid part and a bottom part facing each other in a vertical direction,
both ends of the plate portion are connected to the lid part and the bottom part, respectively and the plate portion is erected in the exhaust box, and
the vaporizer is disposed in the flow channel of the exhaust gas formed by the plate portion.

5. The fuel cell module according to claim 4, wherein a plurality of the plate portions are disposed in the exhaust box so that the plate portions face each other across the discharge part.

6. The fuel cell module according to any one of claims 1 to 5, wherein a heat insulating member is disposed between the vaporizer and the cell stack.

7. The fuel cell module according to any one of claims 1 to 6, further comprising a heating section for heating the vaporizer.

8. The fuel cell module according to claim 7, further comprising a control section for controlling actuation of the heating section based on a temperature of the vaporizer.

9. The fuel cell module according to claim 8, wherein the control section allows the vaporizer to be poured with water when a temperature of the vaporizer is higher than a predetermined threshold value after initiation of operation of the heating section at a time of startup.

10. The fuel cell module according to claim 8 or 9, wherein the control section controls the heating section so that the heating section operates when a temperature of the vaporizer is lower than a first threshold value, and the heating section stops when a temperature of the vaporizer is higher than a second threshold value which is higher than the first threshold value.
